# EUROPÄISCHE PATENTSCHRIFT

(11) **EP 0 502 826 B1**
(45) Veröffentlichungstag und Bekanntmachung des Hinweises auf die Patenterteilung: **03.01.1996**
(21) Anmeldenummer: 92810175.7
(22) Anmeldetag: 06.03.1992
(51) Int. Cl.: F01N 3/02, B01D 46/42

(54) **Filtriereinrichtung zum Entfernen von Russ aus Abgas**
Filter apparatus for separating carbon black out of exhaust gas
Dispositif filtrant pour éliminer la suie de gaz d'échappement

(30) Priorität: 07.03.1991 CH 691/91
(43) Veröffentlichungstag der Anmeldung: 09.09.1992
(73) Patentinhaber: Scambia Industrial Developments Aktiengesellschaft, FL-9494 Schaan (LI)
(72) Erfinder: Steenackers, Pieter Delfina, Dr., B-3030 Heverlee (BE)
(74) Vertreter: Eder, Carl E.

(56) Entgegenhaltungen:
- EP-A- 0 244 061
- DE-A- 2 655 932
- DE-A- 3 520 460
- DE-A- 3 803 100
- US-A- 4 373 330
- US-A- 4 427 418
- US-A- 4 923 484

## Beschreibung

Die Erfindung betrifft eine Filtriereinrichtung zum Entfernen von Russ aus Abgas eines Verbrennungsmotors, insbesondere eines Dieselmotors.

Zur Verminderung der Russ-Partikelemission bei Dieselmotoren sind verschiedene Filtriereinrichtungen bekannt. Diese enthalten gasdurchlässige Filterelemente, die den im Abgas vorhandenen Russ zurückhalten und sammeln. Die in den Filterelementen zurückbehaltenen Russpartikel führen zu einer Erhöhung des Strömungswiderstandes, so dass der Abgasgegendruck des Motors ansteigt. Deshalb ist es notwendig, die in den Filterelementen angesammelten Russpartikel von Zeit zu Zeit durch Oxidation bei hohen Temperaturen zu beseitigen - d.h. zu verbrennen.

Die Oxidation der in einem Filterelement angesammelten Russpartikel setzt bei Verwendung üblicher Filter erst bei Temperaturen oberhalb von 500° C bis 600° C ein. Derartig hohe, zur Entzündung der Russpartikel ausreichende Abgastemperaturen werden von Dieselmotorfahrzeugen im niedrigen Lastbereich sehr oft nicht erreicht, so dass eine ausreichende Regeneration der Filterelemente während des Fahrbetriebes nicht in jedem Fall sichergestellt ist. Dieses Problem stellt sich insbesondere bei Autobussen von städtischen Verkehrsbetrieben und andern häufig in einer Stadt verkehrenden, relativ langsam fahrenden Dieselmotorfahrzeugen. Eine zwangsweise Regeneration der Filterelemente bei Fahrzeugen mit Motoren im unteren Lastbereich kann durch Zufuhr von Wärmeenergie erreicht werden.

Eine aus der DE-A-38 03 100 bekannte Filtriereinrichtung weist zwei Filter mit je einer Kammer und einem in dieser eingebauten, einen Keramik-Filterkörper aufweisenden Filterelement sowie einen Abgasverteiler auf. Der Abgasverteiler hat einen Eingang und zwei Ausgänge, von denen jeder mit dem Einlass von einer der Kammern verbunden ist. Der Abgasverteiler besitzt Abgassteuer- und/oder Ventilmittel zum verändern der beim Betrieb pro Zeiteinheit durch die verschiedenen Filter strömenden Abgasmengen und ist nämlich durch eine Umlenkvorrichtung mit einer in drei verschiedene Stellungen verschwenkbaren Klappe gebildet. Jeder Filter weist ferner ein in bezug auf die Abgas-Strömungsrichtung vor dem Filterelement angeordnetes Heizelement auf. Beim Betrieb der Filtriereinrichtung können die beiden Filter abwechslungsweise während einer Regenerationsphase durch Verbrennung des in den Filterelementen ablagerten Russes regeneriert werden. Gesteuert wird der Regenerationszyklus durch eine Steuereinrichtung, die mit der Umlenkvorrichtung sowie mit in den Filtern angeordneten Druck- und Temperaturfühlern verbunden ist. Während des Normalbetriebes der Filtriereinrichtung steht die Klappe in einer Mittelstellung, wodurch der Abgasstrom gleichmässig auf beide Filter aufgeteilt wird. Sobald die zwischen dem Einlass und dem Auslass des Filterelementes gemessene Druckdifferenz einen bestimmten Wert überschreitet, wird der Regenerationsvorgang eingeleitet. Zur Regeneration eines Filters wird die Klappe derart geschwenkt, dass nur noch ein Teil des gesamten Abgasstromes durch das zu regenerierende Filterelement hindurchgeleitet und dieses mittels des Heizelementes auf eine zur Entzündung des Russes notwendige Temperatur erwärmt wird.

Eine Filtriereinrichtung dieser Art hat den Nachteil, dass jeder der beiden Filter so gross bemessen sein muss, dass sein Filterelement zum Filtrieren von praktisch der ganzen, vom Motor pro Zeiteinheit erzeugten Abgasmenge ausreicht. Für den Einsatz von Filtern mit einem keramischen Filterkörper sind Filterkörpervolumina erforderlich, die etwa das 1,5-fache bis 3-fache des gesamten Motor-Hubvolumens des Fahrzeuges betragen. Bei Autobussen und andern Fahrzeugen mit grossen Motor-Hubvolumina sind also grosse Filterkörpervolumina nötig. Derartig grosse Filterelemente haben den Nachteil, dass sie in Fahrzeugen empfindlich gegenüber mechanischen Belastungen sowie den beim Betrieb durch örtliche Temperaturunterschiede und zeitliche Temperaturveränderungen verursachten, thermischen Spannungen und somit bruchgefährdet sind. Dazu kommt, dass der Abgasstrom einen grossen Keramikkörper ungleichmässig durchströmt, so dass relativ grosse Temperaturunterschiede innerhalb des Keramikkörpers auftreten können, durch die die thermischen Spannungen zusätzlich erhöht werden.

Beim Betrieb einer Filtriereinrichtung mit nur zwei Filtern steigt zudem der Strömungswiderstand des gerade zum Filtrieren benutzten Filters zwischen einer vorgängig durchgeführten und der nachfolgenden Regeneration stark an. Dementsprechend schwankt auch der von der Filtriereinrichtung erzeugte Abgasgegendruck sehr stark, was sich ungünstig auf den Motor auswirkt.

Die stromaufwärts von den Filtern angeordnete Umlenkvorrichtung wird ferner durch den vor den Filtern im Abgas vorhandenen Russ stark verschmutzt. Dies beeinträchtigt die Betriebssicherheit der Filtriereinrichtung und erfordert häufige Reinigungs- und Revisionsarbeiten. Eine gemäss der DE-A-38 03 100 ausgebildetes und stromaufwärts von den Filtern angeordnete Umlenkvorrichtung braucht zudem viel Platz, was ebenfalls unerwünscht ist.

In der DE-A-38 03 100 ist zwar noch erwähnt, dass die Filtriereinrichtung drei und mehr Filter aufweisen könnte (vgl. Spalte 3, Zeilen 60, 61) und dass die als Abgasklappe bezeichnete Umlenkvorrichtung nach den Filtern angeordnet werden könnte (vgl. Spalte 6, Zeilen 12 bis 15). Es ist jedoch nicht offenbart, wie die Umlenkvorrichtung und deren Klappe ausgebildet und gesteuert würde, wenn drei oder mehr Filter vorhanden wären.

Gemäss der DE-A-38 03 100 strömt bei der Regeneration eines Filterelements noch ungefähr 10% bis 30% der den Motor im Leerlauf verlassenden Abgasmenge durch das zu regenerierende Filter (vgl. zum Beispiel Spalte 2, Zeilen 40 bis 48 und Anspruch 1). Bei einer so grossen Durchflussrate wird jedoch noch immer verhältnismässig viel Heizenergie durch das Abgas aus dem Filter heraustransportiert, so dass viel Heizenergie benötigt wird. Zudem würde eine in der offenbarten Weise ausgebildete und beim Betrieb durch das Abgas auf hohe Temperaturen erhitzte Umlenkvorrichtung auch kaum oder höchstens bei sehr grossem Aufwand ermöglichen, den Abgas-Durchfluss viel stärker zu reduzieren oder gar vollständig zu sperren. In der DE-A-38 03 100 ist auch nicht offenbart, wie die Heizelemente mit elektrischem Strom versorgt und betrieben werden. Falls die Heizelemente während der ganzen Betriebsdauer der Filtriereinrichtung ohne Unterbruch mit elektrischem Strom versorgt werden, verbrauchen sie noch mehr Energie.

Eine aus der EP-A-0 244 061 bekannte Filtriereinrichtung besitzt ein Filter mit einer Kammer, die mit einem Einlass sowie mit einem Auslass versehen ist und Filterelemente enthält. Die Abgaszuleitung der Einrichtung ist über eine Verzweigung sowie ein Ventil mit dem Einlass der Kammer und über ein anderes Ventil und eine die Kammer überbrückende Überbrückungsleitung mit dem Auslass der Kammer verbunden. Die Ventile sind durch eine Steuereinrichtung steuerbar. Die Filterelemente sind elektrisch leitend, dienen auch als elektrische Heizelemente und können alle gemeinsam oder einzeln oder gruppenweise über einen Schalter mit elektrischem Strom versorgt werden. Die Ventile und der Schalter sind durch eine Steuereinrichtung steuerbar.

Beim Betrieb dieser Einrichtung wird während der Regeneration der Filterelemente ein grosser Teil des Abgases durch die Überbrückungsleitung hindurch geleitet und also nicht filtriert, was einen erheblichen Nachteil bedeutet. Wenn das mit dem Einlass verbundene Ventil nahe bei der Mündung angeordnet wird, bei welcher der Einlass in den Hohlraum der Kammer mündet, kann es zudem - insbesondere wenn es nur wenig geöffnet ist - eine ungleichmässige Verteilung des in die Kammer einströmenden Abgases verursachen. Wenn das mit dem Einlass verbundene Ventil hingegen relativ weit stromaufwärts von der genannten Mündung angeordnet wird, beanspruchen das Ventil und seine Verbindung mit der Kammer viel Platz.

Es ist daher das Ziel der Erfindung, eine zum Anschliessen und/oder Einbauen an bzw. in die Abgasleitung eines Verbrennungsmotors - insbesondere eines Dieselmotors - bestimmte Filtriereinrichtung zu schaffen, mit der Nachteile der bekannten Filtriereinrichtungen behoben werden. Die Filtriereinrichtung soll insbesondere ausgehend von DE-A-38 03 100 ermöglichen, eine Filtriereinrichtung mit drei oder mehr Filtern zu schaffen, die einzeln und mit geringen, durch die Heizelemente zu erzeugenden Energiemengen regeneriert werden können.

Diese Aufgabe wird durch eine Filtriereinrichtung gelöst, die erfindungsgemäss die Merkmale des Anspruchs 1 aufweist.

Weitere vorteilhafte Ausgestaltungen der Filtriereinrichtung gehen aus den abhängigen Ansprüchen hervor.

Die Filtriereinrichtung besitzt mehrere, nämlich mindestens drei, vorzugsweise mindestens sechs und beispielsweise bis acht oder noch mehr Filter, die je eine Kammer aufweisen, in der ein regenerierbares Filterelement sowie ein steuerbares Heizelement angeordnet ist, wobei sich das letztere in bezug auf die Abgas-Strömungsrichtung beim und/oder stromaufwärts vom Eingang des Filterelementes befindet. Die verwendeten Heizelemente können dabei einfach ausgebildet sein und in einfacher Weise irgendwo zwischen dem Einlass der Kammer und dem in dieser vorhandenen Filterelement montiert werden, so dass sowohl die Herstellung als auch die Montage der Heizelemente in wirtschaftlicher Art möglich ist.

Da die erfindungsgemässe Filtriereinrichtung mindestens drei Filter aufweist, hat sie den Vorteil, dass Filterelemente mit relativ kleinen Keramik-Filterkörpern verwendet werden können, wobei diese weniger bruchgefährdet sind und in denen weniger grosse Temperaturunterschiede und damit weniger thermische Spannungen entstehen als in einem einzigen, grossen Filterkörper. Die zu je einem Filter gehörenden Filterelemente können beim Betrieb der Filtriereinrichtung abwechslungsweise und einzeln regeneriert werden.

Ferner kann bei der erfindungsgemässen Filtriereinrichtung die in der Regenerationsphase durch das zu regenerierende Filterelement strömende Abgasmenge wesentlich verkleinert werden.

Wie nachstehend noch erläutert wird, werden die mindestens drei, vorzugsweise mindestens sechs Filter abwechslungsweise, also nacheinander regeneriert. Das bedeutet, dass beim Betrieb der erfindungsgemässen Filtriereinrichtung mindestens zwei bzw. mindestens fünf Filter zum Filtrieren von Abgas dienen während ein anderes Filter regeneriert wird, und dass der vom Dieselmotor erzeugte und zu filtrierende Abgasstrom auf die mindestens zwei bzw. mindestens fünf Filter aufgeteilt wird, also die effektiv vom Verbrennungsmotor pro Zeiteinheit produzierte Abgasmenge mindestens doppelt bzw. mindestens fünfmal so gross ist wie der während der Filtrationsphase durch ein Filter hindurchströmende Abgasstrom.

Wie bereits erwähnt, bezieht sich der im Anspruch 1 der DE-A-38 03 100 erwähnte Abgasanteil von 10 bis 30% auf die den Verbrennungsmotor im Leerlauf verlassende Abgasmenge. Geht man nun davon aus, dass bei der aus der DE-A-38 03 100 bekannten Einrichtung im Leerlauf die genannten 10% und im oberen Lastenbereich die genannten 30% durch ein zu regenerierendes Filter hindurchgeleitet wird und dass beim Betrieb der erfindungsgemässen Einrichtung jeweils mindestens zwei bzw. mindestens fünf Filter zum Filtrieren von Abgas dienen, so liegt die während der Regenerationsphase durch ein Filter hindurchzuleitende Abgasmenge unter der Abgasmenge, die in der DE-A-38 03 100 aufgezeigt ist, und zwar umso deutlicher je mehr Filter die Filtriereinrichtung aufweist.

Bei der Fabrikation von erfindungsgemässen Filtriereinrichtungen kann eine Serie von gleich ausgebildeten und gleich bemessenen Filtern hergestellt werden. Wenn Filtriereinrichtungen zum Filtrieren des Abgases von Verbrennungsmotoren, insbesondere Dieselmotoren, mit unterschiedlichen Gesamt-Hubvolumina benötigt werden, können diese Filtriereinrichtungen mit einer an das Hubvolumen angepassten Anzahl Filter ausgerüstet werden.

Im folgenden wird der Erfindungsgegenstand anhand in der Zeichnung dargestellter Ausführungsbeispiele erläutert. In der Zeichnung zeigt
die Figur 1 eine vereinfachte, schematische Darstellung einer Filtriereinrichtung mit mindestens vier Filtern,
die Figur 2 eine schematische Darstellung einer Gasabsperrvorrichtung mit zwei Absperrorganen,
die Figur 3 ein Diagramm, in dem die während des Betriebes der Filtereinrichtung durch die verschiedenen Filter strömenden Abgasmengen pro Zeiteinheit dargestellt sind,
die Figur 4 eine vereinfachte, schematische Darstellung einer andern Filtriereinrichtung, bei welcher für jedes Filter eine Gasabsperrvorrichtung mit einem Absperrorgan vorhanden ist, das durch eine Überbrückungsleitung mit einer Drossel überbrückt ist,
die Figur 5 einen vereinfachten Schnitt durch den Auslass der Kammer und das Gasabsperrorgan von einem der in der Figur 5 ersichtlichen Filter und
die Figur 6 eine vereinfachte, schematische Darstellung eines Filters mit einem hohlen Filterelement.

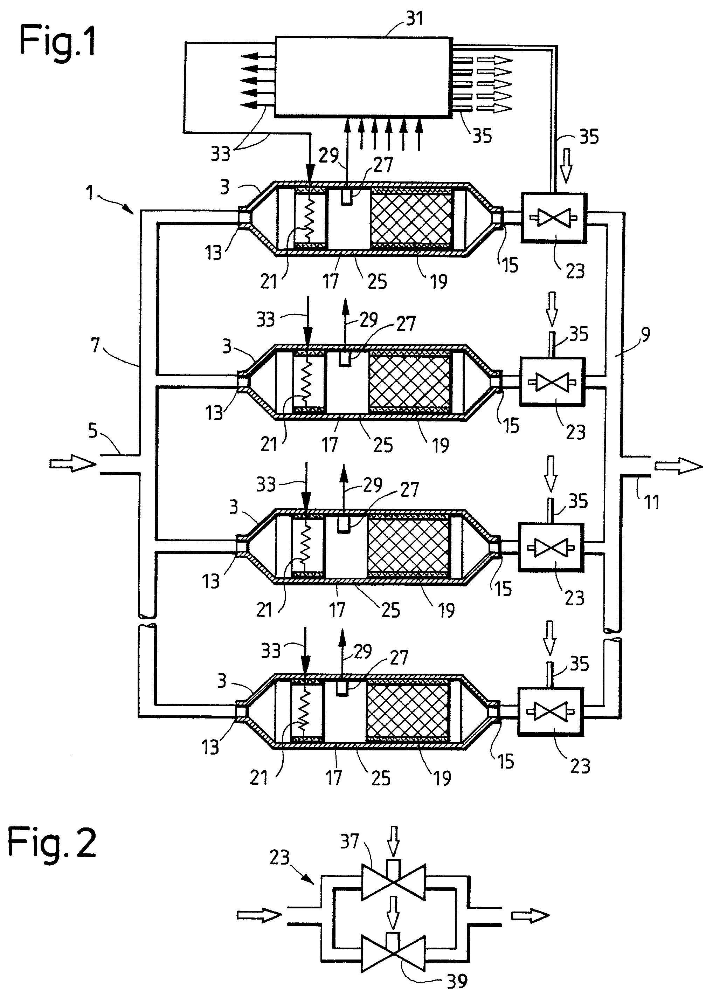

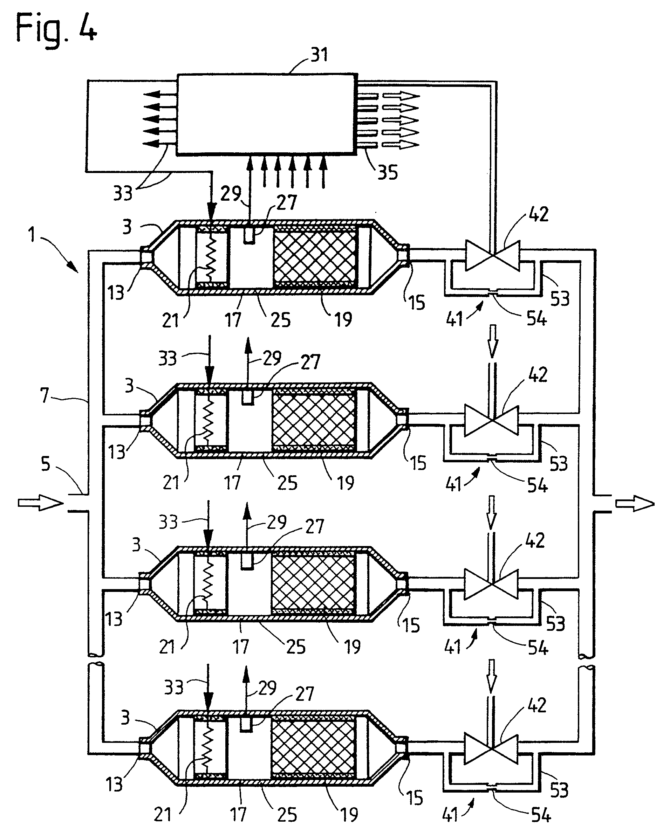

Die in den Figuren 1 und 4 ersichtliche Filtriereinrichtung 1 ist zum Einbau in eine Auspuffanlage vorgesehen, dient zum Entfernen von Russpartikeln oder - kurz gesagt - Russ aus dem Abgas eines Verbrennungsmotors, nämlich eines Dieselmotors, und weist mindestens vier und besser mindestens sechs strömungsmässig parallel zueinander angeordnete Filter 3 auf. Die Filtriereinrichtung 1 besitzt eine direkt oder indirekt mit dem Dieselmotor verbundene, zum Zuführen des zu reinigenden Abgases dienende Abgaszuleitung 5 und einen Abgasverteiler 7 zum Verteilen des Abgases auf die einzelnen Filter 3. Die strömungsmässig parallel angeordneten Filter sind über einen zum Sammeln und Weiterleiten des in ihnen filtrierten und gereinigten Abgases dienenden Abgassammler 9 mit einer Abgasableitung 11 verbunden.

Jeder Filter 3 weist eine mit einem Einlass 13 sowie einem Auslass 15 versehene, wärmeisolierende Kammer 17 auf. Der Gasverteiler 7 besitzt einen mit der Gaszuleitung 5 verbundenen Eingang und mehrere mit je einem der Einlässe 13 verbundene Ausgänge. Der Eingang und die Ausgänge des Gasverteilers 7 sind durch Durchgänge miteinander verbunden, die weder verstellbaren Verschlusselemente noch verstellbaren Umlenkelemente enthalten und also dauernd offen sind. Jede Kammer 17 enthält ein gasdurchlässiges, zum Zurückhalten von Russpartikeln dienendes Filterelement 19 und ein stromaufwärts von dessen durch eine radiale Abgaseintrittsfläche gebildetem Eingang angeordnetes, steuerbares, elektrisches Heizelement 21. Ferner sind Abgassteuermittel und/oder Ventilmittel vorhanden, die für jeden Filter 3 eine zu dessen Auslass 15 gehörende und/oder mit diesem verbundene Gasabsperrvorrichtung 23 aufweisen. Jeder Einlass 13 ist mit dem Abgasverteiler 7 und jeder Auslass 15 mit dem Abgassammler 9 verbunden. In jeder Kammer 17 ist zwischen dem Einlass 15 von dieser und der Eingangsseite des Filterelementes 19 - und zwar in einem freien Bereich des Kammer-Innenraums zwischen dem Heizelement 21 und dem Filterelement 19 - mindestens ein an der Wandung 25 der Kammer 17 befestigter Temperatursensor 27 angebracht, der über eine elektrische Leitung 29 an einer zentralen Steuereinrichtung 31 angeschlossen ist. Als Filterelemente 19 für den Rückhalt der Russpartikel können zum Beispiel Wabenfilter mit einem porösen, keramischen Filterkörper verwendet werden. Diese Filterkörper haben eine Vielzahl von Durchgängen, nämlich parallelen Filterkanälen, die wechselweise an der Gaseintrittsseite oder Gasaustrittsseite verschlossen sind. Die zwischen den Durchgängen oder Kanälen vorhandenen Wände haben Poren, so dass das Abgas beim Betrieb durch die Durchgänge bzw. Kanäle sowie porösen Wände hindurchströmt und dabei die Russpartikel an den Wänden der Filterkanäle abgeschieden werden. Vorzugsweise wird jedes Filterelement 19 mit einer dieses umschliessenden, deformierbaren sowie mehr oder weniger elastischen, wärmeisolierenden Isoliermatte in die Kammer 17 eingebaut. Die Isoliermatten können zum Beispiel aus einem unter der Markenbezeichnung INTERAM von der 3M Company erhältlichen Material bestehen, das durch Erhitzen aufblähbaren Vermiculit aufweist. Durch die Isoliermatte wird das Filterelement 19 festgehalten und vor Beschädigungen durch Vibrationen oder durch starke Schläge auf die Filtriereinrichtung geschützt. Die Isoliermatten können zudem Abweichungen der Formen sowie Abmessungen der Keramikkörper der Filterelemente von den vorgesehenen Soll-Formen bzw. Soll-Abmessungen und auch die durch Temperaturänderungen verursachten, unterschiedlichen Abmessungsänderungen des keramischen Materials und der zumindest im wesentlichen metallischen, etwa aus Blech bestehenden und in der Zeichnung mit eher überproportionaler Dicke gezeichneten Kammer-Wandungen 25 ausgleichen.

Jedes Heizelement 21 weist vorzugsweise mindestens einen mit Haltemitteln an der Wandung 25 der Kammer 17 befestigten Heizleiter auf, der zum Beispiel aus einem schlangenlinien-, zickzack-, wendel- oder spiralförmigen Widerstands-Draht oder -Metallband besteht. Jedes Heizelement 21 ist derart ausgebildet, dass das dem betreffenden Filter beim Betrieb zugeführte Abgas durch das Heizelement hindurch oder neben diesem vorbei strömen und zeitweise durch das Heizelement 21 erhitzt werden kann. Jeder Heizleiter ist durch die Haltemittel - allenfalls mit Ausnahme von einem seiner Enden oder Anschlüsse - elektrisch gegen die im allgemeinen metallische Wandung 25 isoliert. Die Haltemittel sind vorzugsweise ausgebildet, um Beschädigungen des Heizelementes 21 durch Vibrationen und Erschütterungen zu verhindern. Jedes Heizelement 21 ist über eine elektrische Leitung 33 mit der Steuereinrichtung 31 verbunden, wobei jede Leitung 33 zum Beispiel zwei elektrische Leiter aufweist. Es sei angemerkt, dass einer der beiden Leiter ganz oder teilweise durch metallische, elektrisch leitende Teile der Wandung 25, des Abgasverteilers 7 und/oder des Abgassammlers 9 und/oder sonstiger Bauelemente der Filtriereinrichtung und des Fahrzeugs gebildet und/oder ersetzt sein kann.

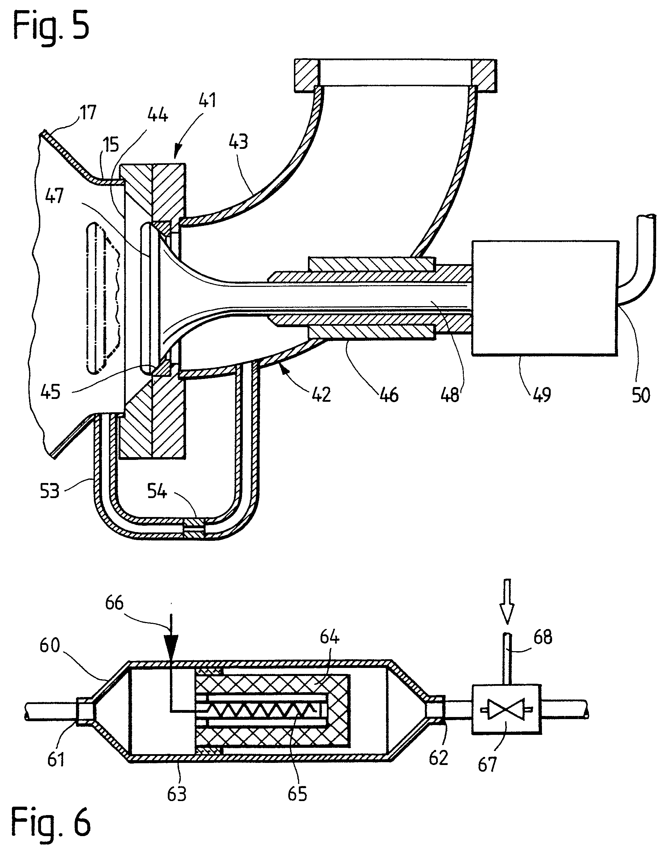

Eine mögliche Ausführungsform einer Gasabsperrvorrichtung ist separat in der Figur 2 dargestellt und weist zwei strömungsmässig parallel zueinander am Auslass 15 des zugeordneten Filters angeschlossene und/oder in den Auslass 15 eingesetzte, steuerbare Absperrorgane 37 und 39, d.h. Ventile auf. Die beiden Absperrorgane 37 und 39 weisen je einen Durchgang sowie ein zum wahlweise Absperren oder Freigeben des Durchganges dienendes Verschlusselement auf. Die Durchgänge der beiden Absperrorgane 37 und 39 haben in vollständig freigegebenem Zustand bei ihren engsten Stellen verschiedene Durchlassquerschnittsflächen. Die Durchlassquerschnittsfläche des Absperrorgans 39 ist zum Beispiel kleiner als diejenige des Absperrorgans 37 und beträgt beispielsweise höchstens oder weniger als 10% oder nur höchstens 5% derjenigen des Absperrorgans 37. Wenn nur das Absperrorgan 39 geöffnet ist, beträgt dann die durch das Filter 3 strömende Abgasmenge pro Zeiteinheit vorzugsweise höchstens oder weniger als 10%, zum Beispiel höchstens 5% und beispielsweise mindestens 1% oder eventuell noch weniger als 1% derjenigen Abgasmenge, die pro Zeiteinheit durch den Filter 3 strömt, wenn die Durchgänge beider Absperrorgane vollständig freigegeben sind. Die Absperrorgane können zum Beispiel in der Art eines entsperrbaren Rückschlagventils ausgebildet sein sowie einen ringförmigen Ventilsitz und ein etwa tellerförmiger Verschlusselement aufweisen, das parallel zu der vom Ventilsitz umschlossenen Achse von diesem abgehoben werden kann. Das die grössere Durchlassquerschnittsfläche aufweisende Absperrorgan jeder Absperrvorrichtung kann zum Beispiel ähnlich ausgebildet sein wie das noch anhand der Figur 5 für eine andere Variante der Filtriereinrichtung beschriebene Absperrorgan. Die Absperrorgane 37, 39 oder mindestens diejenigen von diesen, welche die kleinere Durchlassquerschnittsfläche aufweisen, können jedoch eventuell als Verschlusselemente auch Absperrschieber oder Klappen aufweisen. Die Verschlusselemente sind mit beispielsweise pneumatischen Stellvorrichtungen verstellbar. Im übrigen kann für jedes Verschlusselement noch eine an diesem angreifende Rückstellfeder vorhanden sein, die das Verschlusselement bei druckluftloser Stellvorrichtung in eine vorgegebene Stellung bringt und/oder in einer solchen hält. Jedes Absperrorgan 37, 39 jeder Gasabsperrvorrichtung 23 ist über mindestens eine zum Zuführen und/oder Ableiten von Druckluft dienende Leitung 35 mit der Steuereinrichtung 31 verbunden, wobei in der Figur 1 pro Gasabsperrvorrichtung 23 nur eine solche Leitung gezeichnet wurde.

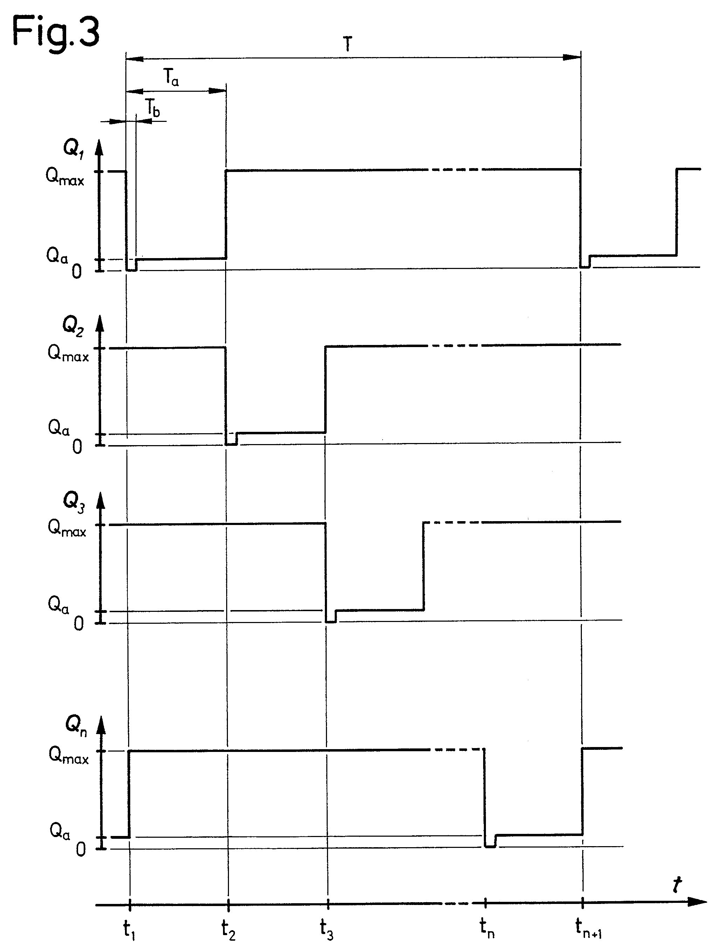

Nun wird anhand von einem in der Figur 3 dargestellten Diagramm der Betrieb der Filtriereinrichtung 1 erläutert, wobei sich die nun folgenden Angaben auf eine Einrichtung beziehen, deren Filter mit je einer in der Figur 2 dargestellten Gasabsperrvorrichtung verbunden sind. Die Filtriereinrichtung habe eine mit n bezeichnete Anzahl von Filtern. Dabei ist n entsprechend den früheren Angaben mindestens gleich vier und zum Beispiel gleich sechs. Die Figur 3 enthält eine Abszisse, auf der die Zeit t aufgetragen ist, und mehrere Teil-Diagramme, auf deren Ordinaten die durch den ersten, zweiten, dritten und n-ten Filter 3 strömenden Abgasmengen pro Zeiteinheit Q₁ bzw. Q₂ bzw. Q₃ bzw. Qₙ aufgetragen sind.

Nun wird angenommen, dass der Dieselmotor der Filtriereinrichtung 1 Abgas zuführt, das Russ sowie auch noch Sauerstoff enthält und eine unter der Zündtemperatur des Russes liegende, zum Beispiel 100° C bis 300° C betragende Temperatur hat. Das in der Figur 3 ersichtliche Diagramm veranschaulicht einen zeitlichen Ausschnitt aus einem zyklischen Prozess, in dem die Filter 3 während einer Filtrationsphase das durch sie hindurchgeleitete Abgas filtrieren und abwechslungsweise während einer Regenerationsphase durch Verbrennen des im Filterelement 19 abgelagerten Russes regeneriert werden. Beim Betrieb der Einrichtung filtriert der erste Filter während einer sich vor dem Zeitpunkt t₁ befindenden Filtrationsphase das durch sein Filterelement 19 hindurchgeleitete Abgas. Die Gasabsperrvorrichtung 23 des ersten Filters ist während der Filtrationsphase vollständig geöffnet, so dass Q₁ - d.h. die durch das Filterelement 19 des ersten Filters hindurchströmende Abgasmenge pro Zeiteinheit - einen maximalen Wert Qₘₐₓ aufweist. Im Zeitpunkt t₁ wird die am oder im Auslass 15 des Filters 3 angeordnete Gasabsperrvorrichtung 23 durch die Steuereinrichtung 31 pneumatisch - d.h. durch Druckluftzufuhr oder Druckentlastung - durch Schliessen beider Absperrorgane 37, 39 vollständig geschlossen, so dass die durch den Filter hindurchströmende Abgasmenge pro Zeiteinheit von Qₘₐₓ auf Null sinkt. Ferner schaltet die Steuereinrichtung 31 im Zeitpunkt t₁ das zum ersten Filter 3 gehörende Heizelement 21 ein und führt diesem nämlich einen elektrischen Strom zu, der in Wärme umgewandelt wird. Somit beginnt im Zeitpunkt t₁ für den ersten Filter die Regenerationsphase, die sich über die Zeitdauer Tₐ erstreckt. Die Regenerationsphase kann in einen Anfangsabschnitt oder Vorheizabschnitt mit der Zeitdauer T_{b} und in einen restlichen Abschnitt unterteilt werden, der im folgenden auch als Abbrennabschnitt bezeichnet wird. Während des sich über die Zeitdauer T_{b} erstreckenden Anfangs- oder Vorheizabschnitts der Regenerationsphase bleibt die Gassperrvorrichtung 23 vollständig geschlossen, so dass der Druck in der Kammer 17 etwas ansteigt und vor allem das sich zwischen dem Einlass 13 sowie dem Filterelement 19 des ersten Filters befindende Abgas auf eine oberhalb der Zündtemperatur des Russes liegende, beispielsweise mindestens 500° C oder mindestens 600° C betragende Temperatur erwärmt wird. Am Ende des Vorheizabschnitts der Regenerationsphase öffnet die Steuereinrichtung 31 das eine kleinere Durchflussrate ergebende Absperrorgan 39 der zum ersten Filter gehörenden Gasabsperrvorrichtung 23. Deren Absperrorgan 37 bleibt dagegen geschlossen, so dass also die gesamte Gasabsperrvorrichtung 23 nur teilweise offen ist. Während des auf den Anfangsabschnitt folgenden Abbrennabschnittes der Regenerationsphase strömt dann durch den Filter 3 pro Zeiteinheit eine Abgasmenge Qₐ, die entsprechend den weiter vorne gemachten Angaben höchstens oder weniger als 10% der während der Filtrationsphase durch den Filter strömenden Abgasmenge Qₘₐₓ pro Zeiteinheit beträgt. Es sei hier angemerkt, dass Qₐ in der Figur 3 zur Verdeutlichung mit einem im Vergleich zu Qₘₐₓ übertrieben grossen Wert gezeichnet wurde.

Die Zeitdauer T_{b} kann dadurch festgelegt werden, dass durch einen Temperatursensor 27 die Temperatur von dem in der betreffenden Kammer 17 vorhandenen Abgas und/oder von dem zu regenerierenden Filterelement 19 gemessen wird und dass beim Erreichen einer vorzugsweise fest vorgegebenen Temperatur von mindestens 500° C und beispielsweise mindestens 600° C, der Anfangsabschnitt der Regenerationsphase beendet wird, indem eben die Steuereinrichtung 31 das Absperrorgan 39 öffnet.

Im genannten Anfangsabschnitt oder Vorheizabschnitt der Regenerationsphase wird durch das Erwärmen des Abgases auch das Filterelement 19 oder mindestens dessen dem Einlass 13 zugewandter Endabschnitt erwärmt. Falls dadurch der Russ bereits während des genannten Anfangsabschnitts der Regenerationsphase entzündet wird, bricht die Russverbrennung wegen Sauerstoffmangels nach kurzer Zeit wieder ab. Wenn nun jedoch im Abbrennabschnitt vom Heizelement erhitztes und Sauerstoff mitführendes Abgas durch das Filterelement 19 strömt, wird der im Filterelement vorhandene Russ entzündet und brennt dann ab. Das Heizelement 21 bleibt während des Abbrennabschnitts in Betrieb und erzeugt beispielsweise mit gleicher Leistung Wärme wie während des Anfangs- oder Vorheizabschnitts. Da aber das Abgas während des Abbrennabschnitts durch das Heizelement oder an diesem vorbei strömt, wird es vom Heizelement auf eine weniger hohe Temperatur erwärmt als während des Vorheizabschnitts. Weil jedoch das Abgas und das Filterelement im Abbrennabschnitt auch durch die Verbrennung des Russes erwärmt werden, bleibt die Temperatur während des Abbrennabschnitts ausreichend, um den Brennvorgang aufrecht zu erhalten. Die Russverbrennung beginnt dabei beim dem Einlass 13 zugewandten Ende des Filterelements und schreitet dann entlang von dessen Kanälen bis zu dem den Auslass 15 zugewandten Ende des Filterelements fort. Die Zeitdauer Tₐ ist aufgrund von Versuchen und/oder Berechnungen derart festgelegt, dass sie ausreicht, um allen im Filterelement 21 des ersten Filters vorhandenen Russ zu verbrennen.

Die Regenerationsphase wird beendet, indem die Steuereinrichtung 31 das Heizelement 21 des ersten Filters ausschaltet und auch noch das zur Gasabsperrvorrichtung des ersten Filters gehörenden Absperrorgan 37 öffnet, das eine grössere Durchflussrate ermöglicht als das Absperrorgan 39. Dadurch wird die Gasabsperrvorrichtung wieder vollständig geöffnet, so dass die durch das Filterelement 19 hindurchströmende Abgasmenge pro Zeiteinheit wieder Q_{maX} beträgt. Der erste Filter dient nun wieder zum Filtrieren von Gas, so dass für den ersten Filter wieder eine Filtrationsphase beginnt. Entsprechend dem in Figur 3 dargestellten Diagrammes wird beim Beenden der Regeneration des Filterelements 19 des ersten Filters sogleich - nämlich im Zeitpunkt t₂ - die Regeneration des Filterelements des zweiten Filters eingeleitet. Im Zeitpunkt t₃ beginnt dann die Regeneration des Filterelements des dritten Filters. Im Zeitpunkt tₙ beginnt die Regeneration des Filterelements des n-ten Filters. Die Regeneration erfolgt bei jedem Filter analog wie sie für den ersten Filter beschrieben wurde. Dementsprechend durchlaufen alle Filter nacheinander die Regenerationsphase, bis nach der Zeit T ein Regenerationszyklus abgeschlossen ist und im Zeitpunkt tₙ₊₁ wieder die Regeneration des Filterelements des ersten Filters beginnt.

Wenn man von den Umschalt-Zeitpunkten t₁, t₂, t₃,..... absieht, wird also immer ein Filter regeneriert, während alle andern Filter - d.h. (n-1) Filter - zum Filtrieren von Abgas dienen. Im übrigen wird selbstverständlich auch das während einer Regenerationsphase eines Filters durch dieses strömende Abgas noch filtriert und/oder durch Verbrennen des Russes vom Russ befreit.

Für die Steuerung des Regenerationszyklus der Filtriereinrichtung durch die Steuereinrichtung 31 kann die Umschaltung der einzelnen Filter zwischen Regenerationsphase und Filtrationsphase nach einer fest eingestellten Zeitdauer Tₐ erfolgen. Die Zeitdauer Tₐ einer Regenerationsphase eines Filters beträgt vorzugsweise mindestens 4 Minuten, höchstens 30 Minuten und nämlich zum Beispiel 5 Minuten bis 10 oder 15 Minuten. Ein ganzer Regenerations-Zyklus benötigt dann bei einer Filtriereinrichtung mit n Filtern die n-fache und also zum Beispiel bei sechs Filtern die 6-fache Zeitdauer Tₐ.

Beim Betrieb kann die pro Zeiteinheit von einem Verbrennungsmotor erzeugte und durch die Filtriereinrichtung hindurchgeleitete Abgasmenge im Verlauf der Zeit abhängig von der Leistung des Motors sowie von anderen Betriebsparametern variieren. Zu den in der Beschreibung sowie in den Ansprüchen angegebenen Verhältniswerten von Abgasmengen pro Zeiteinheit sei daher angemerkt, dass diese Verhältniswerte immer unter der Voraussetzung gelten, dass die durch die ganze Filtriereinrichtung hindurchströmende Abgasmenge pro Zeiteinheit im betrachteten Zeitraum konstant bleibt.

Die in der Figur 4 dargestellte Filtriereinrichtung ist weitgehend ähnlich wie die anhand der Figuren 1 und 2 beschriebene Filtriereinrichtung ausgebildet und besitzt insbesondere stromabwärts von den Filterelementen 19 angeordnete Abgassteuermittel und/oder Ventilmittel. Diese weisen für jeden Filter 3 eine als Ganzes mit 41 bezeichnete Gasabsperrvorrichtung auf. Jede Gasabsperrvorrichtung 41 besitzt nur ein einziges steuerbares Absperrorgan 42. Ein Abschnitt von einer der Kammern 17 und von deren mit einer Absperrvorrichtung 41 verbundenem und/oder versehenem Auslass 15 sind separat in der Figur 5 dargestellt. Das Absperrorgan 42 der Absperrvorrichtung 41 weist ein Gehäuse 43 auf, das einen Rohrbogen besitzt, durch eine Flansch-Verbindung lösbar mit der Kammer 17 verbunden ist, ein Stück des Abgassammlers 9 bildet und mit dem restlichen Teil von diesem verbunden ist. Der Auslass 15 begrenzt zusammen mit dem Gehäuse 43 den Durchgang 44 des Absperrorgans 42. Dieses weist einen Ventilsitz 45 mit einer ringförmigen, die Achse der Kammer 17 umschliessenden, zu dieser rotationssymmetrischen, zum Beispiel konischen Sitzfläche auf, die dem sich stromaufwärts vom Ventilsitz befindenden Raumbereich des Durchgangs 44 und/oder Innenraums der Kammer 17 sowie dem Filterelement 19 zugewandt ist. Das Gehäuse 43 ist mit einer Durchführung 46 versehen, dessen Achse mit derjenigen der Kammer 17 und des Ventilsitzes 45 fluchtet. Ein mehr oder weniger tellerförmiges und/oder kolbenförmiges Verschlusselement 47 ist mit einer Stange 48 verbunden, welche verschiebbar und mindestens annähernd oder vollkommen gasdicht durch die Durchführung 48 hindurch aus dem Gehäuse 43 herausgeführt und auf dessen Aussenseite mit einer pneumatischen Stellvorrichtung 49 verbunden ist. Diese besitzt mindestens einen Druckluftanschluss 50, der über eine Leitung mit der Steuereinrichtung 31 verbunden ist.

Der Druck des beim Betrieb der Filtriereinrichtung in der Kammer 17 vorhandenen Abgases ist bestrebt, das Verschlusselement 47 gegen den Ventilsitz 45 zu drücken. Die Stellvorrichtung 49 kann zudem zum Beispiel eine Feder aufweisen, die auf das Verschlusselement 47 eine dieses gegen den Ventilsitz drückende oder zielende Kraft ausübt. Das Verschlusselement 47 befindet sich dann bei druckluftloser Stellvorrichtun 49 in seiner in der Figur 5 mit vollen Linien gezeichneten Schliess-Stellung. Durch Zuführen von Druckluft zur Stellvorrichtung 49 kann das Verschlusselement 47 ausgehend von dessen Schliess-Stellung in einer stromaufwärts zum Filterelement 19 hin gerichteten Richtung vom Ventilsitz weg in die in der Figur 5 mit strichpunktierten Linien angedeutete Freigabe-Stellung verschoben werden, in der das Verschlusselement 47 den Durchgang 44 freigibt. Das Absperrorgan 42 ist also in der Art eines entsperrbaren Rückschlagventils ausgebildet. Dadurch kann erreicht werden, dass das Verschlusselement 48 in seiner Schliess-Stellung den Durchgang 44 sowohl bei kalter Filtriereinrichtung als auch bei den höchsten beim Betrieb auftretenden Temperaturen des Abgases und der Teile des Absperrorgans 42 mindestens annähernd und beispielsweise vollkommen gasdicht absperrt.

Eine Überbrückungsleitung 53 ist zwischen dem Filterelement 19 sowie dem Ventilsitz mit dem Auslass 15 und/oder dem Absperrorgan 42 verbunden und überbrückt einen mit dem Ventilsitz 45 versehenen Abschnitt des Durchgangs 44. Die Überbrückungsleitung 53 weist ein Röhrchen und eine Drossel 54 auf. Diese besitzt zum Beispiel eine Bohrung, welche den engsten Abschnitt des von der Überbrückungsleitung 53 begrenzten Durchgangs bildet. Die Durchlassquerschnittsfläche der Drossel 54 ist wesentlich kleiner als die Durchlassquerschnittsfläche des Durchgangs 44 und beträgt nämlich zweckmässigerweise weniger als 10%, vorzugsweise höchstens 5% und zum Beispiel höchstens 1% der Durchlassquerschnittsfläche des engsten, vom Ventilsitz 45 begrenzten Abschnitts des Durchgangs 44 des Absperrorgans 42. Die lichte Weite des Ventilsitzes 45 kann zum Beispiel 50 mm bis 70 mm betragen. Die lichte Weite der Drossel 54 kann dann zum Beispiel 3 mm bis 4 mm betragen.

Der Betrieb der in der Figur 4 dargestellten Filtriereinrichtung unterscheidet sich nur geringfügig von demjenigen der anhand der Figuren 1 und 2 beschriebenen Filtriereinrichtung. Die Steuereinrichtung 31 steuert die Heizelemente 21 und Absperrorgane 42 der anhand der Figuren 4 sowie 5 beschriebenen Filtriereinrichtung insbesondere derart, dass jeder Filter während einer Filtrationsphase, in der sein Heizelement 21 ausser Betrieb und das zugeordnete Absperrorgan 42 vollständig offen ist, zum Filtrieren von Abgas dient. Ferner werden die Filter zyklisch regeneriert. Dabei wird jeder Filter während einer Regenerationsphase regeneriert, in der alle andern Filter zum Filtrieren dienen. Die Steuereinrichtung 31 schaltet das Heizelement 21 eines zu regenerierenden Filters am Anfang der Regenerationsphase ein und an deren Ende wieder aus. Ferner wird das Absperrorgan 42 eines zu regenerierenden Filters am Anfang einer Regenerationsphase durch die Steuereinrichtung 31 vollständig geschlossen und am Ende der Regenerationsphase wieder vollständig geöffnet. Da die Überbrückungsleitung 53 und deren Drossel 54 dauernd offen sind, kann dann während der ganzen Regenerationsphase noch Abgas durch die Überbrückungsleitung 53 strömen. Die während der Regenerationsphase pro Zeiteinheit durch den zu regenerierenden Filter sowie die diesem zugeorndete Überbrückungsleitung 53 strömende Abgasmenge Qₐ ist entsprechend dem Verhältnis der Durchlassquerschnittsflächen der Drossel 54 und des Ventilsitzes 45 wesentlicher kleiner als die in einer Filtrationsphase pro Zeiteinheit durch das Filterelement 19 des Filters und danach durch das offene Absperrorgan 42 sowie die diesem strömungsmässig parallel geschaltete Überbrückungsleitung 53 hindurchströmende Abgasmenge Qₘₐₓ. Qₐ beträgt zum Beispiel höchstens 5% oder nur höchstens 1% von Qₘₐₓ oder noch wesentlich weniger als 1% von Qₘₐₓ. Die Heizleistung der elektrisch heizbaren Heizelemente 21 ist derart bemessen, dass das während der Regenerationsphase durch einen Filter 3 strömende Abgas nach einem Teil der durch die Steuereinrichtung festgelegten Zeitdauer Tₐ der Regenerationsphase die zum Zünden des Russes erforderliche Temperatur erreicht, so dass das Filterelement 19 dann im restlichen Teil der Regenerationsphase durch Abbrennen des Russes regeneriert wird.

Wenn der eine, erste Filter der in der Figur 4 gezeichneten Filtriereinrichtung auf diese Weise regeneriert wurde, öffnet die Steuereinrichtung 31 am Ende der Regenerationsphase das dem regenerierten Filter zugeordnete Absperrorgan 42, so dass der Filter nun wieder zur Filtration dient. Ferner leitet die Steuereinrichtung am Ende der Regenerationsphase des ersten Filters die Regeneration des nächsten Filters ein. Die zeitlichen Verläufe der Durchflussraten, d.h. der pro Zeiteinheit durch die verschiedenen Filter der Filtriereinrichtung gemäss der Figur 4 strömenden Abgasmengen, unterscheiden sich also von den in der Figur 3 gezeichneten Verläufen der Durchflussraten zum Beispiel nur dadurch, dass die Durchflussrate jedes Filters während der ganzen Regenerationsphase den von Null verschiedenen Wert Qₐ hat.

Soweit vorgängig nichts anders angegeben wurde, kann die anhand der Figuren 4 sowie 5 beschriebene Filtriereinrichtung gleich oder ähnlich ausgebildet sein wie die anhand der Figuren 1 sowie 2 beschriebene Filtriereinrichtung und auch gleich oder ähnlich wie diese betrieben werden.

Nun sollen noch einige weitere Eigenschaften, Vorteile und Varianten der Filtriereinrichtungen erläutert werden.

Wenn gemäss den vorgängig beschriebenen Ausführungsbeispielen mindestens drei, vorzugsweise mindestens vier und beispielsweise sechs bis acht oder noch mehr Filter vorhanden sind, deren Filterelemente zyklisch regeneriert werden, ändert der durch die Ablagerung von Russ verursachte Strömungswiderstand der ganzen Filtriereinrichtung und auch der vom genannten Strömungswiderstand verursachte Abgasgegendruck während des Betriebs nur relativ wenig. Dementsprechend wird der Betrieb des Verbrennungsmotors auch nie durch einen übermässigen Abgasgegendruck behindert. Ferner gelangt nur filtriertes Abgas zu den Gasabsperrvorrichtungen, so dass deren Absperrorgane und gegebenenfalls Überbrückungsleitungen nicht durch Russ verschmutzt und verstopft werden können.

Da sich die Gasabsperrvorrichtungen 23 oder 41 stromabwärts von den Filterelementen 19 befinden, können sie relativ nahe bei diesen und bei den Kammern 17 und/oder sogar mindestens zum Teil in den Kammern 17 angeordnet werden, ohne die gleichmässige Verteilung des durch die Einlässe 13 in die Kammern einströmenden Abgases zu stören.

Beim Betrieb der beschriebenen Filtriereinrichtungen muss zum Starten der Russverbrennung jeweils nur das Abgas und das Filterelement von einem der Filter erwärmt werden. Ferner strömt während der Regenerationsphase nur relativ wenig Abgas durch den zu regenerierenden Filter, so dass nur wenig Wärme durch das Abgas in die Umgebung abgeführt wird. Zudem wird das Heizelement jedes Filters nur dann vorübergehend eingeschaltet, wenn der betreffende Filter zu regenerieren ist. Dementsprechend verbraucht jedes Heizelement zum Starten und Aufrechterhalten der Russverbrennung nur relativ wenig elektrische Energie, und zwar auch dann, wenn die Temperatur des vom Dieselmotor zugeführten Abgases relativ weit unter der Zündtemperatur des Russes liegt.

Die in den Figuren 1 und 4 ersichtlichen Filter 3 können durch Filter ersetzt werden, die in der Art des in der Figur 6 gezeichneten Filters 60 ausgebildet sind, der zum Teil gleich oder ähnlich wie die anhand der Figuren 1 und 4 beschriebenen Filter 3 ausgebildet ist. Der Filter 60 weist eine mit einem Einlass 61 sowie einem Auslass 62 versehene Kammer 63 auf, in der ein gasdurchlässiges, zum Zurückhalten von Russpartikeln dienendes Filterelement 64 befestigt ist. Dieses besteht aus einer zylindrischen Hülse mit einem Mantel und einem an dem dem Einlass 61 abgewandten Ende des Filterelements angeordneten Endabschnitt. Das Filterelement begrenzt also einen Hohlraum, der einenends offen und andernends geschlossen ist.

Das Filterelement 64 kann dabei zum Beispiel Keramikschaum und/oder Keramikwolle und/oder Steinwolle und/oder gesinterte Metallwolle aufweisen und unregelmässig verteilt Poren und/oder Durchgängen haben. Das Filterelement 64 kann derart ausgebildet sein, dass Abgas aus dem im Filterelement vorhandenen Hohlraum in im allgemeinen radialer Richtung durch den Mantel und in im allgemeinen axialer Richtung durch den Endabschnitt des Filterelements hindurchströmen kann. Der Mantel des Filterelements 64 ist bei dessen offenem, dem Einlass 61 zugewandten Ende durch eine ringförmige Halte- und Abschlussvorrichtung fest und dicht mit der Wandung der Kammer 63 verbunden. Im restlichen Längsbereich des Mantels können ebenfalls noch nicht gezeichnete Haltemittel vorhanden sein, die aber derart ausgebildet sein sollen, dass zwischen dem Filterelement-Mantel und der Wandung der Kammer 63 mindestens stellenweise ein Zwischenraum frei bleibt, durch welchen durch den Mantel des Filterelements hindurchgeströmtes Abgas zum Auslass 62 strömen kann. Die Wandung der Kammer 63 und/oder der Mantel des Filterelements 64 und/oder die Halte- und Abschlussvorrichtung und/oder die allenfalls zusätzlich vorhandenen Haltemittel ist bzw. sind vorzugsweise mit einer Wärmeisolation versehen.

Das im Hohlraum des Filterelements 64 angeordnete Heizelement 65 weist vorzugsweise mindestens einen mit Haltemitteln an der Kammer 17 und/oder am Filterelement 64 befestigten Heizleiter auf, der zum Beispiel aus einem zickzack-, wendel- oder spiralförmigen Draht oder Metallband besteht. Das Heizelement 65 ist dabei über eine elektrische Leitung 66 mit einer Steuereinrichtung verbunden. Der Filter 60 weist ferner eine zum Auslass gehörende und/oder mit diesem verbundene Gasabsperrvorrichtung 67 auf, die über mindestens eine zum Zuführen und/oder Ableiten von Druckluft dienende Leitung 68 mit der bereits erwähnten Steuereinrichtung verbunden ist. Ferner kann mindestens ein am Filterelement 64 und/oder an der Wandung der Kammer 63 angebrachter Temperatursensor vorhanden sein, der über eine elektrische Leitung mit der Steuervorrichtung verbunden ist und durch den die Temperatur im Filter 60 gemessen wird.

Die Gasabsperrvorrichtung 67 kann zum Beispiel ähnlich wie die Gasabsperrvorrichtungen 23 oder 41 ausgebildet sein. Eine Filtriereinrichtung mit Filtern 60 kann dementsprechend ähnlich wie die anhand der Figuren 1 und 2 bzw. die anhand der Figuren 4, 5 beschriebene Filtriereinrichtung betrieben werden. Insbesondere ermöglicht das in bezug auf die Strömungsrichtung des Abgases stromaufwärts des Filterelements 64 und vollständig ausserhalb von dessen Durchgängen und/oder Poren angeordnete Heizelement 65 in der Regenerationsphase das sich in seiner Umgebung befindende Abgas und das Filterelement zu erhitzen. Die Anordnung des Heizelements 65 in dem vom Filterelement 64 begrenzten Hohlraum ergibt zusätzlich den Vorteil, dass praktisch alle allenfalls vom Heizelement abgestrahlte Wärme in das Filterelement gestrahlt wird.

Die Filtriereinrichtung und das Verfahren für deren Betrieb können noch auf andere Arten geändert werden. Hier sei zunächst erwähnt, dass die Kammern 17 der Filter 3 mit voneinander in Abstand stehenden Wandungen 25 gezeichnet wurden, dass aber die Wandungen zusätzlich zu ihrer Verbindung durch den Abgasverteiler 7 und den Abgassammler 9 noch durch andere Verbindungsmittel mechanisch miteinander verbunden sein können. Eventuell können sogar jeweils zwei oder drei oder noch mehr oder sogar alle Kammern in einem gemeinsamen Gehäuse angeordnet und mindestens zum Teil durch dieses gebildete Wandungen haben.

Die für eine im allgemeinen axiale Durchströmung vorgesehenen Filterelemente 19 können ebenfalls aus einem der für das Filterelement 64 angegebenen Materialien gebildet sein. Des weitern können die gasdurchlässigen Filterelemente eventuell mindestens ein Drahtgewebe oder -geflecht aufweisen. Die Filterelemente können zudem eventuell mit einer katalytischen Beschichtung versehen sein, so dass dann unter Umständen bereits Abgastemperaturen von mindestens 400° C oder mindestens 450° C zum Entzünden des Russes ausreichen.

Die Absperrorgane der Gasabsperrvorrichtungen können statt pneumatisch auch elektrisch betätigbar sein. Die Steuereinrichtung wird dann dementsprechend statt durch Druckluftleitungen durch elektrische Leitungen mit den Gasabsperrvorrichtungen verbunden.

Bei der anhand der Figuren 4 und 5 beschriebenen Filtriereinrichtung könnte man eventuell die Drossel 54 weglassen und dafür die Durchlassquerschnittsfläche des die Überbrückungsleitungen bildenden Röhrchens so klein bemessen, dass gewissermassen die ganze Überbrückungsleitung als Drossel wirkt.

Im Rahmen der Erfindung ist es auch möglich, dass jede Gasabsperrvorrichtung nur ein einziges Absperrorgan mit einem Durchgang und einem verstellbaren Verschlusselement aufweist und dass keine den Überbrückungsleitungen 53 entsprechende Überbrückungsleitungen vorgesehen werden. Das Absperrorgan kann dann ausgebildet werden, um den Durchgang wahlweise in einer Schliessstellung ganz zu sperren oder in zwei Freigabestellungen - nämlich in einer Zwischenstellung und einer Öffnungsstellung - zwei verschieden grosse Querschnittsflächen des Durchgangs freizugeben. Die in der Zwischenstellung - d.h. bei der kleineren freigegebenen Querschnittsfläche - durch den Filter strömende Abgasmenge pro Zeiteinheit beträgt dann vorzugsweise höchstens oder weniger als 10% oder höchstens nur 5% und beispielsweise mindestens 1% oder eventuell noch weniger als 1% der in der Öffnungsstellung - d.h. bei der grösseren freigegebenen Querschnittsfläche - durchströmenden Abgasmenge pro Zeiteinheit.

Falls der Sauerstoffgehalt des im Motor entstehenden Abgases zum Verbrennen des Russes nicht ausreicht, kann dem Abgas während des Abbrennabschnitts der Regenerationsphase noch Frischluft beigemischt werden.

Des weitern kann man die Temperatursensoren 27 weglassen und beim Betrieb der anhand der Figuren 1 und 2 beschriebenen Filtriereinrichtung die Zeitdauer T_{b} fest vorgeben.

Wenn die im Abbrennabschnitt der Regenerationsphase durch das Verbrennen des Russes erzeugte Wärme ohne zusätzliche Beheizung durch die Heizelemente zur Aufrechterhaltung der Verbrennung ausreicht, kann die Steuereinrichtung die Heizelemente eventuell kurz nach dem Beginn des Abbrennabschnitts - d.h. nach dem Entzünden des Russes - ausschalten. Dadurch kann die von den Heizelementen verbrauchte Energie noch verkleinert werden.

Ferner ist es auch denkbar, dass die Steuerung des Regenerationszyklus der Filtriereinrichtung von Betriebsparametern des Verbrennungsmotors abhängig gemacht werden kann, dessen Abgas zu filtrieren ist. Zum Beispiel können die Zeitdauern Tₐ der Regenerationsphasen der einzelnen Filter in irgend einer Weise abhängig von der Motorleistung geändert werden. In Betriebsphasen, in denen der Verbrennungsmotor mit hoher Leistung arbeitet, kann der Filtriereinrichtung vom Verbrennungsmotor zugeführte Abgas unter Umständen bereits eine oberhalb der Zündtemperatur des Russes liegende Temperatur haben, so dass der Russ bei der Verwendung der Filter zum Filtrieren des Abgases von selbst - d.h. ohne besondern Massnahmen - mehr oder weniger kontinuierlich abbrennt. Die Steuereinrichtung kann eventuell ausgebildet werden, um während solchen Betriebsphasen vorübergehend alle Filter auf "Filtrationsbetrieb" zu schalten, d.h. gleichzeitig durch alle Filter die maximale Abgasmenge pro Zeiteinheit hindurch strömen zu lassen.

Ferner können zum Beispiel nach einer Betriebsphase mit einer besonders hohen Russerzeugung während einer anschliessenden Betriebsphase, in der durch den Verbrennungsmotor nur eine geringe Menge von Abgas und Russ erzeugt wird, jeweils zwei Filter gleichzeitig regeneriert werden, sofern die Filtriereinrichtung eine gerade Anzahl Filter aufweist. In diesem Fall können dann während einer gewissen Betriebsphase - zum Beispiel bis alle Filter einmal regeneriert sind - abwechselnd zwei verschiedene Filter gleichzeitig regeneriert werden. Danach kann die Steuereinrichtung die Heizelemente und Absperrorgane wieder gemäss dem "normalen" vorher beschriebenen Modus steuern, bei welchem jeweils abwechselnd nur ein einziges Filter regeneriert wird.

## Patentansprüche

1. Filtriereinrichtung zum Entfernen von Russ aus Abgas eines Verbrennungsmotors, insbesondere eines Dieselmotors, mit einem Abgasverteiler (7), mindestens drei Filtern (3, 41, 60), die je eine mit einem Einlass (13, 43, 61) sowie einem Auslass (15, 45, 62) versehene Kammer (17, 47, 63) aufweisen und bei ihren Einlässen (13, 43, 61) mit dem Abgasverteiler (7) verbunden sind, wobei
a) jede Kammer (17, 47, 63) ein gasdurchlässiges, zum Zurückhalten von Russ dienendes Filterelement (19, 49, 64) sowie ein in bezug auf die Abgas-Strömungsrichtung stromaufwärts vom Filterelement (19, 64) und/oder bei dessen Abgaseintrittsfläche angeordnetes Heizelement (21, 65) enthält,
b) stromabwärts von den Filterelementen (19, 64) steuerbare Abgassteuermittel und/oder Ventilmittel zum Verändern der durch die verschiedenen Filter (3, 41) strömenden Abgasmengen vorhanden und mit einer zum Steuern von ihnen dienenden Steuereinrichtung (31) verbunden sind,
c) die Heizelemente (21, 65) mit der Steuereinrichtung (31) verbunden und durch diese steuerbar sind, und wobei
d) die Steuereinrichtung (31) ausgebildet ist, um die Heizelemente (21, 65) sowie die Gasabsperrvorrichtungen (23, 41, 67) derart zu steuern, dass jeder Filter (3, 60) während einer Filtrationsphase das durch sein Filterelement (19, 64) hindurchgeleitete Abgas filtriert und zyklisch während einer Regenerationsphase durch Verbrennen des in ihm abgelagerten Russes regeneriert wird, dadurch gekennzeichnet,
dass die Abgassteuermittel und/oder Ventilmittel für jedes Filter (3, 41) eine durch die Steuereinrichtung (31) separat steuerbare Gasabsperrvorrichtung (23, 49, 67) aufweisen, dass während der Regeneration eines Filterelementes (19, 64) mindestens zwei Filterelemente zum Filtrieren von Abgas dienen und dass jede Gasabsperrvorrichtung (23, 49, 67) derart ausgebildet und steuerbar ist, dass während mindestens eines Teils der Regenerationsphase die durch das zu regenerierende Filterelement (19, 64) strömende Abgasmenge pro Zeiteinheit höchstens 10% der während der Filtrationsphase durch das Filterelement (19, 64) strömenden Abgasmenge pro Zeiteinheit beträgt.

2. Filtriereinrichtung nach Anspruch 1, dadurch gekennzeichnet, dass jede Gasabsperrvorrichtung (23, 41, 67) pneumatisch und/oder elektrisch steuerbar ist.

3. Filtriereinrichtung nach einem der Ansprüche 1 und 2, dadurch gekennzeichnet, dass in jeder Kammer (17) ein Temperatursensor (27) angeordnet ist, um die Temperatur des zwischen dem Einlass (13) und dem Filterelement (19, 64) vorhandenen Abgases und/oder des Filterelements (19) selbst zu messen, und dass jeder Temperatursensor (27) mit der Steuereinrichtung (31) verbunden ist.

4. Filtriereinrichtung nach einem der Ansprüche 1 bis 3, dadurch gekennzeichnet, dass jede Gasabsperrvorrichtung (23) zwei je einen Durchgang sowie ein zum wahlweise Absperren oder Freigeben von diesem dienendes Verschlusselement aufweisende Absperrorgane (37, 39) hat, deren Durchgänge mindestens bei ihren eingangsseitigen Enden miteinander verbunden sind und in vollständig freigegebenem Zustand verschiedene Durchlassquerschnittsflächen haben, wobei die Durchlassquerschnittsfläche des einen Absperrorganes (39) höchstens 10% derjenigen des anderen Absperrorganes (37) beträgt.

5. Filtriereinrichtung nach einem der Ansprüche 1 bis 3, dadurch gekennzeichnet, dass jede Gasabsperrvorrichtung nur ein einziges Absperrorgan mit einem Durchgang und einem verstellbaren Verschlusselement aufweist und dass das Absperrorgan ausgebildet ist, um den Durchgang wahlweise zu sperren oder zwei verschieden grosse Querschnittsflächen des Durchganges freizugeben, wobei die kleinere freigebbare Querschnittsfläche höchstens 10% der grösseren freigebbaren Querschnittsfläche beträgt.

6. Filtriereinrichtung nach einem der Ansprüche 1 bis 3, dadurch gekennzeichnet, dass jede Gasabsperrvorrichtung (41) ein Absperrorgan (42) mit einem durch ein verstellbares Verschlusselement (47) wahlweise absperrbaren und freigebbaren Durchgang (44) aufweist und dass eine dessen absperrbaren Abschnitt überbrückende Überbrückungsleitung (53) mit einem dauernd offenen Durchgang vorhanden ist, der derart ausgebildet ist, dass die pro Zeiteinheit durch ihn strömende Abgasmenge wesentlich kleiner ist als die bei freigegebenem Absperrorgan-Durchgang (44) pro Zeiteinheit durch diesen strömenden Abgasmenge, wobei die Durchlassquerschnittsfläche des Durchgangs der Überbrückungsleitung (53) bei der engsten Stelle dieses Durchgangs weniger als 10% der Durchlassquerschnittsfläche des Absperrorgan-Durchgangs (44) bei dessen engster Stelle beträgt.

7. Filtriereinrichtung nach einem der Ansprüche 4 bis 6, dadurch gekennzeichnet, dass der Durchgang (44) des bzw. mindestens eines Absperrorgans (37, 39, 42) jeder Gasabsperrvorrichtung (23, 42, 67) einen Ventilsitz (45) aufweist und dass das Verschlusselement (47) parallel zu einer vom Ventilsitz (45) umschlossenen Achse verstellbar ist und beim Absperren des Durchgangs (44) an einer Fläche des Ventilsitzes (45) anliegt, die dem sich stromaufwärts von diesem befindenden Raum zugewandt ist.

8. Filtriereinrichtung nach einem der Ansprüche 1 bis 7, dadurch gekennzeichnet, dass mindestens vier und vorzugsweise mindestens sechs Filter (3, 41) der genannten Art vorhanden sind und mit dem Abgasverteiler (7) verbundene Einlässe (13, 43) haben und dass während der Regeneration eines Filterelements (19, 64) jeweils alle andern Filterelemente (19, 64) zum Filtrieren von Abgas dienen.

9. Filtriereinrichtung nach einem der Ansprüche 1 bis 8, dadurch gekennzeichnet, dass jedes Heizelement (21, 65) durch elektrischen Strom heizbar ist, dass das einem zu regenerierenden Filterelement (19, 64) zugeordnete Heizelement (21, 65) während mindestens eines Teils der Regenerationsphase eingeschaltet und danach wieder ausgeschaltet wird.

10. Filtriereinrichtung nach einem der Ansprüche 1 bis 9, dadurch gekennzeichnet, dass der Abgasverteiler (7) einen zum Verbinden mit einem Verbrennungsmotor bestimmten Eingang und diesen mit den Einlässen (13, 61) der Filter (3, 60) verbindende Durchgänge besitzt, die dauernd offen und frei von verstellbaren Verschlusselementen sowie verstellbaren Umlenkelementen sind.

## Claims

1. Filter equipment for removal of soot from exhaust gas of a combustion engine, particularly a diesel engine, with an exhaust gas manifold (7), at least three filters (3, 41, 60), which each have a chamber (17, 47, 63) provided with an inlet (13, 43, 61) as well as an outlet (15, 45, 62), and are connected at their inlets (13, 43, 61) with the exhaust gas manifold (7), wherein
a) each chamber (17, 47, 63) contains a gas-permeable filter element (19, 49, 64) serving for retention of soot as well as a heating element (21, 65) arranged upstream of the filter element (19, 64) with respect to the exhaust gas direction of flow and/or at the exhaust gas entry surface thereof,
b) controllable exhaust gas control means and/or valve means for changing the exhaust gas quantities flowing through the different filters are present downstream of the filter elements (19, 64) and are connected with a control equipment (31) serving for control of them,
c) the heating elements (21, 65) are connected with the control equipment (31) and controllable by this, and wherein
d) the control equipment is constructed so as to control the heating elements (21, 65) as well as the gas blocking devices (23, 41, 67) in such a manner that each filter (3, 60) during a filtration phase filters the exhaust gas conducted through its filter element (19, 64) and cyclically during a regeneration phase is regenerated by combustion of the soot deposited in it, characterised thereby
that the exhaust gas control means and/or valve means for each filter (3, 41) comprises a gas blocking device (23, 49, 67) separately controllable by the control equipment (31), that during the regeneration of a filter element (19, 64) at least two filter elements serve for the filtering of exhaust gas and that each exhaust gas blocking device (23, 49, 67) is constructed and controllable in such a manner that during at least a part of the regeneration phase the exhaust gas quantity flowing per unit of time through the filter element (19, 64) to be regenerated amounts to at most 10% of the exhaust gas quantity flowing per unit of time through the filter element (19, 64) during the filtration phase.

2. Filter equipment according to claim 1, chracterised thereby that each gas blocking device (23, 41, 67) is controllable pneumatically and/or electrically.

3. Filter equipment according to one of claims 1 and 2, characterised thereby that a temperature sensor (27) is arranged in each chamber (17) in order to measure the temperature of the exhaust gas present between the inlet (13) and the filter element (19, 64) and/or of the filter element (19) itself, and that each temperature sensor (27) is connected with the control device (31).

4. Filter equipment according to one of claims 1 to 3, characterised thereby that each gas blocking device (23) has two blocking elements (37, 39), which each comprise a respective through passage as well as a closure element serving for the selectable blocking or freeing of this and the through passages of which are connected together at least at their ends at the entry side and have throughflow cross-sectional areas differing in fully freed state, wherein tbe throughflow cross-sectional area of the one blocking element (39) amounts to at most 10% of that of the other blocking element (37).

5. Filter equipment according to one of claims 1 to 3, characterised thereby that each gas blocking device comprises only a single blocking element with a through passage and an adjustable closure element and that the blocking element is constructed so as to selectably block the through passage or to free two differently sized cross-sectional areas of the through passage, wherein the smaller cross-sectional area which can be freed amounts to at most 10% of the larger cross-sectional area that can be freed.

6. Filter equipment according to one of claims 1 to 3, characterised thereby that each gas blocking device (41) comprises a blocking element (42) with a through passage (44) which can be selectably blocked and freed by an adjustable closure element (47) and that a bypass duct (53), which bypasses a blockable section of the passage, with a permanently open through passage is present, which is formed in such a manner that the exhaust gas quality flowing through it per unit of time is substantially smaller than the exhaust gas quantity flowing through this per unit of time when the blocking element through passage (44) is freed, wherein the throughflow cross-sectional area of the through passage of the bypass duct (53) at the narrowest place of this through passage amounts to less than 10% of the throughflow cross-sectional area of the blocking element through passage (44) at the narrowest place thereof.

7. Filter equipment according to one of claims 4 to 6, characterised thereby that the through passage (44) of the or at least one blocking element (37, 39, 42) of each gas blocking device (23, 42, 67) has a valve seat (45) and that the closure element (47) is adjustable parallel to an axis enclosed by the valve seat (45) and on blocking of the through passage (44) rests on a surface of the valve seat (45) which is towards the space disposed upstream thereof.

8. Filter equipment according to one of claims 1 to 7, characterised thereby that at least four and preferably at least six filters (3, 41) of the said kind are present and have inlets (13, 43) connected with the exhaust gas manifold (7) and that during the regeneration of a filter element (19, 64) each time all other filter elements (19, 64) serve for filtering of exhaust gas.

9. Filter equipment according to one of claims 1 to 8, characterised thereby that each heating element (21, 65) is heatable by electric current and that the heating element (21, 65) associated with the one filter element (19, 64) to be regenerated is switched on during at least a part of the regeneration phase and thereafter is switched off again.

10. Filter equipment according to one of claims 1 to 9, characterised thereby that the exhaust gas manifold (7) possesses an inlet intended for connection with a combustion engine and through passages connecting this with the inlets (13, 61) of the filter (3, 60), which are permanently open and free of adjustable closure elements as well as adjustable deflecting elements.

## Revendications

1. Dispositif de filtration pour éliminer la suie des gaz d'échappement d'un moteur à combustion interne, en particulier, d'un moteur diesel, comprenant un distributeur de gaz d'échappement (7), au moins trois filtres (3, 41, 60) qui présentent chacun une chambre (17, 47, 63) munie d'une entrée (13, 43, 61) ainsi que d'une sortie (15, 45, 62) et qui sont reliées au distributeur de gaz d'échappement (7) au droit de leurs entrées ('13, 43, 61), dans lequel
a) chaque chambre (17, 47, 63) renferme un élément filtrant (19, 49, 64) perméable aux gaz, servant à retenir la suie, ainsi qu'un élément chauffant (21, 65) disposé en amont de l'élément filtrant (19, 64), relativement à la direction de l'écoulement des gaz d'échappement, et/ou au droit de l'entrée des gaz d'échappement de cet élément,
b) des moyens de commande des gaz d'échappement (19, 64) pouvant être commandés et/ou des moyens obturateurs servant à faire varier les quantités de gaz d'échappement qui passent à travers les différents filtres (3, 41) sont présents en aval des éléments filtrants (19, 64) et sont reliés à un dispositif de commande (31) servant à les commander,
c) les éléments chauffants (21, 65) sont reliés au dispositif de commande (31) et peuvent être commandés par ce dernier, et dans lequel
d) le dispositif de commande (31) est construit pour commander les éléments chauffants (21, 65) ainsi que les dispositifs d'arrêt des gaz (23, 41, 67) de telle manière que chaque filtre (3, 60) filtre les gaz d'échappement qui passent à travers son élément filtrant (19, 64) pendant une phase de filtration et est régénéré cycliquement pendant une phase de régénération, par combustion de la suie qui s'y est déposée, caractérisé
en ce que les moyens de commande des gaz d'échappement et/ou les moyens obturateurs prévus pour chaque filtre (3, 41) comprennent un dispositif d'arrêt des gaz d'échappement (23, 49, 67) pouvant être commandé séparément par le dispositif de commande (31), en ce que, pendant la régénération d'un élément filtrant (19, 64), au moins deux éléments filtrants servent pour la filtration des gaz d'échappement, et en ce que chaque dispositif d'arrêt des gaz (23, 49, 67) est construit et peut être commandé de telle manière que, pendant au moins une partie de la phase de régénération, la quantité de gaz d'échappement qui traverse l'élément filtrant (19, 64) à régénérer par unité de temps soit au maximum de 10 % de la quantité de gaz d'échappement qui traverse l'élément filtrant (19, 64) pendant la phase de filtration.

2. Dispositif de filtration selon la revendication 1, caractérisé en ce que chaque dispositif d'arrêt des gaz (23, 41, 67) peut être commandé par voie pneumatique et/ou électrique.

3. Dispositif de filtration selon une des revendications 1 et 2, caractérisé en ce qu'un capteur de température (27) est agencé dans chaque chambre (17) pour mesurer la température des gaz d'échappement présents entre l'entrée (13) et l'élément filtrant (19, 64) et/ou celle de l'élément filtrant (19) lui-même, et en ce que chaque capteur de température (27) est relié au dispositif de commande (31).

4. Dispositif de filtration selon une des revendications 1 à 3, caractérisé en ce que chaque dispositif d'arrêt des gaz (23) possède deux organes d'arrêt (37, 39) qui présentent chacun un passage et un élément obturateur servant à obturer ou dégager sélectivement ce passage, et dont les passages sont reliés l'un à l'autre, au moins au droit de leurs extrémités d'entrée, et ont des surfaces de section libre différentes à l'état entièrement dégagé, la surface de section libre de l'un (39) des organes d'arrêt représentant au maximum 10 % de celle de l'autre organe d'arrêt (37).

5. Dispositif de filtration selon une des revendications 1 à 3, caractérisé en ce que chaque dispositif d'arrêt des gaz ne possède qu'un organe d'arrêt unique muni d'un passage et d'un élément obturateur réglable, et en ce que l'organe d'arrêt est construit, soit pour obturer le passage, soit pour dégager deux surfaces de section du passage possédant différentes grandeurs, la plus petite surface de section pouvant être dégagée représentant au maximum 10 % de la plus grande surface de section pouvant être dégagée.

6. Dispositif de filtration selon une des revendications 1 à 3, caractérisé en ce que chaque dispositif d'arrêt des gaz (41) comprend un organe d'arrêt (42) qui présente un passage (44) pouvant être sélectivement obturé et dégagé par un élément obturateur mobile (47) et en ce qu'il est prévu un conduit de dérivation (53) possédant un passage ouvert en permanence, qui contourne le segment obturable de ce passage, ce conduit étant construit de manière que la quantité de gaz qui y passe par unité de temps soit beaucoup plus petite que la quantité de gaz d'échappement qui passe dans le passage (44) de l'organe d'arrêt par unité de temps lorsque ce dernier est dégagé, la surface de section libre du passage du conduit de dérivation (53) étant, au point le plus étroit de ce passage, inférieur à 10 % de la surface de section libre du passage (44) de l'organe d'arrêt à son point le plus étroit.

7. Dispositif de filtration selon une des revendications 4 à 6, caractérisé en ce que le passage (44) de l'organe d'arrêt ou d'au moins un organe d'arrêt (37, 39, 42) de chaque dispositif d'arrêt des gaz (23, 42, 67) présente un siège de soupape (45) et en ce que l'élément obturateur (47) peut se déplacer parallèlement à un axe entouré par le siège de soupape (45) et, lors de l'obturation du passage (44), est appuyé contre une surface du siège de soupape (45) qui est dirigée vers l'espace qui se trouve en amont de ce siège.

8. Dispositif de filtration selon une des revendications 1 à 7, caractérisé en ce qu'il est prévu au moins quatre et, de préférence six filtres (3, 41) du type précité qui ont des entrées (13, 43) reliées au distributeur de gaz d'échappement (7), et en ce que, pendant la régénération d'un élément filtrant (19, 64), tous les autres éléments filtrants (19, 64) servent à la filtration des gaz d'échappement.

9. Dispositif de filtration selon une des revendications 1 à 8, caractérisé en ce que chaque élément chauffant (21, 65) peut être chauffé par un courant électrique, en ce que l'élément chauffant (21, 65) associé à un élément filtrant (19, 64) à régénérer est mis sous tension pendant au moins une partie de la phase de régénération puis remis hors tension.

10. Dispositif de filtration selon une des revendications 1 à 9, caractérisé en ce que le distributeur de gaz d'échappement (7) comprend une entrée destinée à être reliée à un moteur à combustion interne et des passages qui la relient aux entrées (13, 61) des filtres (3, 60) et qui sont ouverts en permanence et libres d'éléments obturateurs mobiles ainsi que d'éléments de déviation mobiles.
